# FASCICULE DE BREVET EUROPEEN

(11) **EP 3 083 294 B1**
(45) Date de publication et mention de la délivrance du brevet: **02.01.2019**
(21) Numéro de dépôt: 14812582.6
(22) Date de dépôt: 06.11.2014
(51) Int. Cl.: B60G 7/00, B60G 21/05, B62D 17/00, F16F 1/38, B62D 7/18

(54) **TRAIN DE SUSPENSION POUR VÉHICULE AUTOMOBILE, ROTULE DE LIAISON POUR LE TRAIN ET PROCÉDÉ DE MONTAGE CORRESPONDANT**
AUFHÄNGUNGSANORDNUNG FÜR EIN KRAFTFAHRZEUG, VERBINDUNGSKUGELGELENK FÜR DIE ANORDNUNG UND ENTSPRECHENDES INSTALLATIONSVERFAHREN
SUSPENSION ASSEMBLY FOR A MOTOR VEHICLE, CONNECTING BALL JOINT FOR THE ASSEMBLY AND CORRESPONDING INSTALLATION METHOD

(30) Priorité: 20.12.2013 FR 1363255
(43) Date de publication de la demande: 26.10.2016
(73) Titulaire: Renault s.a.s., 92100 Boulogne-Billancourt (FR)
(72) Inventeur: ROULIN, Francois, F-92000 Nanterre (FR); WILLEMENOT, Johann, F-92350 Le Plessis Robinson (FR)
(86) Numéro de dépôt international: PCT/FR2014/052828
(87) Numéro de publication internationale: WO 2015/092174

(56) Documents cités:
- EP-A1- 0 473 876
- EP-A1- 1 757 468
- WO-A1-97/31794
- WO-A1-2012/032259
- WO-A1-2013/037652
- WO-A1-2013/072604
- FR-A1- 2 452 411
- US-A- 4 529 223
- US-A- 4 650 208
- US-A1- 2011 127 744

## Description

L'invention se rapporte au domaine technique des trains de véhicule automobile.

Un train avant ou arrière de véhicule automobile correspond à un système complet de suspension avant ou arrière du véhicule. Chaque train comporte un essieu qui comprend une traverse s'étendant transversalement sous la caisse et deux bras longitudinaux portant chacun une roue, par l'intermédiaire d'un porte-fusée et d'une fusée. Un tel train est par exemple décrit dans WO 2013 037652. Le porte-fusée est la pièce mécanique qui, par l'intermédiaire de la fusée, supporte le roulement mécanique et les parties tournantes de la roue. C'est aussi cette pièce qui est orientée lors d'une action sur la direction, par l'intermédiaire d'une biellette de direction. Afin de permettre aux roues arrière de braquer, chaque porte-fusée est monté sur l'essieu par l'intermédiaire d'une rotule supérieure et d'une rotule inférieure, qui définissent un axe de pivot de direction. Un angle, appelé angle de chasse, est généralement donné au pivot de direction. Par définition, l'angle de chasse est l'angle entre l'axe de pivot et la perpendiculaire au sol dans un plan vertical. Cet angle joue un rôle important dans le comportement de la direction du véhicule.

Un essieu arrière est muni de deux bras longitudinaux s'étendant vers l'avant du véhicule. Chacun des bras d'essieu est fixé au châssis du véhicule par un point d'articulation situé dans la partie avant du bras. Selon la garde au sol du véhicule, ce point d'articulation de l'essieu sur châssis est positionné plus ou moins haut par rapport au sol. Prenons l'exemple d'une berline basse équipé d'un train arrière sur lequel les porte-fusée sont montés de manière à procurer un angle de chasse souhaité. Si ce train arrière était monté sur un monospace à garde au sol haute, les points d'articulation essieu sur châssis devraient être surélevés. Il en résulterait une modification de l'angle de chasse, non souhaitable. Un même train arrière ne peut donc pas être utilisé sur des véhicules ayant différentes gardes au sol, sans modification coûteuse de l'essieu.

La présente invention vient améliorer la situation.

A cet effet, l'invention concerne un train de suspension de roues pour véhicule automobile comportant, à chaque extrémité d'une traverse d'essieu, un bras longitudinal de liaison à un châssis du véhicule, et un porte-fusée monté sur le bras par l'intermédiaire de deux rotules de liaison, supérieure et inférieure, qui définissent un axe de pivot de direction, caractérisé en ce que l'une des deux rotules, inférieure et supérieure, est asymétrique et apte à être montée dans deux sens distincts de manière à définir deux axes de pivot de direction distincts, décalés angulairement.

Le train de suspension de l'invention peut être monté sur deux véhicules ayant des gardes au sol différentes, l'une haute et l'autre basse, et procurer deux angles de chasse identiques ou proches grâce à la possibilité de créer deux axes de pivot de rotation, décalés angulairement l'un par rapport à l'autre, selon le sens de montage de la rotule asymétrique. Le décalage angulaire entre les deux axes de pivot de rotation possibles permet en définitive de compenser totalement ou partiellement, le pivotement du porte-fusée autour de l'axe de roue induit par le changement de garde au sol. Grâce à cela, un même train de suspension peut être utilisé pour deux types de véhicule différents, ce qui est économiquement très intéressant pour le constructeur automobile.

Dans une forme de réalisation particulière, la rotule asymétrique comprend une douille intérieure comportant deux portions tubulaires coaxiales et de longueurs respectives différentes, situées de part et d'autre d'une portion contenant le centre de rotation de la rotule.

Avantageusement, la rotule asymétrique est la rotule inférieure.

Avantageusement encore, la rotule asymétrique est montée sur une chape support en U solidaire du bras longitudinal.

Dans une forme de réalisation particulière, le décalage angulaire entre les deux axes de pivot correspondant aux deux sens de montage de la rotule asymétrique est adapté pour induire deux angles de chasses souhaités, respectivement dans le cas où le train avec la rotule asymétrique montée dans l'un des deux sens est monté sur un véhicule ayant une première garde au sol et dans le cas où le train avec la rotule asymétrique montée dans l'autre sens est monté sur un autre véhicule ayant une deuxième garde au sol, différente de la première.

Les deux angles de chasse peuvent être identiques, ou proches.

Le train de suspension selon l'invention peut être un train de suspension arrière.

L'invention concerne aussi une rotule de liaison entre un porte-fusée et un bras longitudinal d'essieu de liaison à un châssis de véhicule automobile, comportant deux parties, intérieure et extérieure, mobiles en rotation l'une par rapport à l'autre autour d'un centre de rotation, ladite rotule ayant deux sens de montage possibles, caractérisée en ce qu'elle présente une asymétrie adaptée pour modifier la position du centre de rotation selon le sens de montage.

Dans une forme de réalisation particulière, elle comprend une douille intérieure comportant deux portions tubulaires coaxiales et de longueurs respectives différentes, situées de part et d'autre d'une portion contenant le centre de rotation de la rotule.

L'invention concerne enfin un procédé de montage d'un train de suspension tel que défini plus haut sur un véhicule automobile ayant une garde de sol donnée, caractérisé en ce qu'on sélectionne l'un des deux sens de montage possibles de la rotule asymétrique selon la garde au sol du véhicule.

L'invention sera mieux comprise à l'aide de la description suivante d'un exemple particulier de réalisation d'un train de suspension de véhicule automobile et d'une rotule de liaison selon l'invention, en référence aux dessins annexés sur lesquels :
- Les figures 1A et 1B représentent une vue de côté d'une roue et d'un porte-fusée du train, respectivement dans deux sens de montage de la rotule inférieure ;
- Les figures 2A et 2B représentent schématiquement un axe de pivot de direction de la roue de la figure 1 et un segment reliant le centre de roue et un point d'articulation essieu sur châssis, respectivement pour une berline basse et pour un monospace haut ;
- La figure 3 représente schématiquement la rotule inférieure des figures 1A et 1B dans les deux sens de montage ;
- La figure 4 représente une vue éclatée du porte fusée et de la rotule inférieure des figures 1A et 1B;
- La figure 5 représente une vue générale du train de suspension, selon un exemple particulier de réalisation de l'invention ;
- La figure 6 représente une vue de côté de l'un des porte-fusée du train de la figure 5.

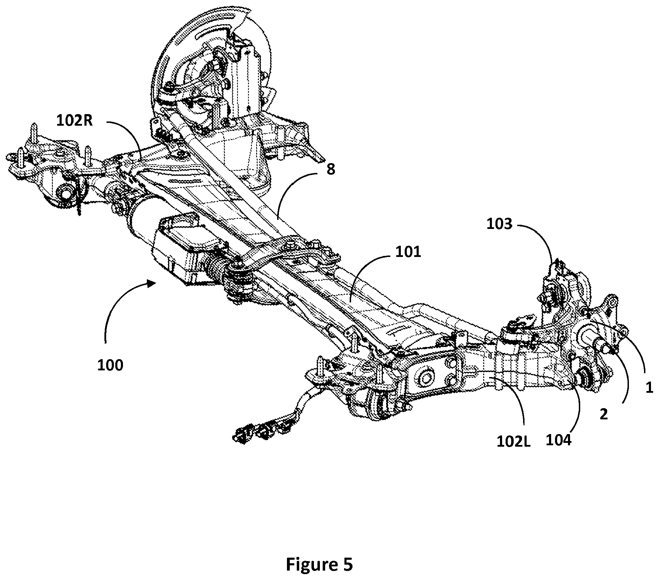

Sur la figure 5, on a représenté une vue générale d'un train de suspension 100 de véhicule automobile. Dans l'exemple particulier décrit ici, il s'agit d'un train arrière. L'invention pourrait également s'appliquer à un train de suspension avant.

De façon connue, le train arrière 100 comporte une traverse d'essieu 101 et, à chaque extrémité latérale de la traverse 101, un bras longitudinal 102R (côté droit), 102L (côté gauche), s'étendant vers l'avant du véhicule, de liaison au châssis, ou caisse, du véhicule. Chaque bras 102R (droit), 102L (gauche), est en outre destiné à porter une roue 3, par l'intermédiaire d'un porte-fusée 1 et d'une fusée 2. Par souci de clarté, les éléments correspondants, respectivement situés côtés droit et côté gauche du véhicule, portent les mêmes références.

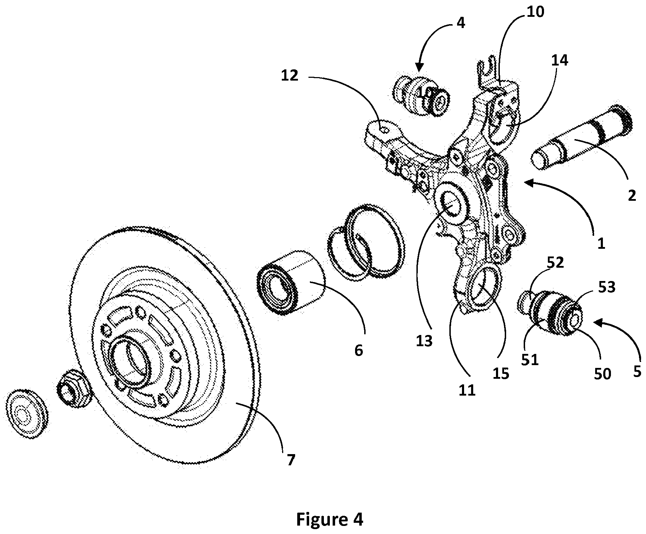

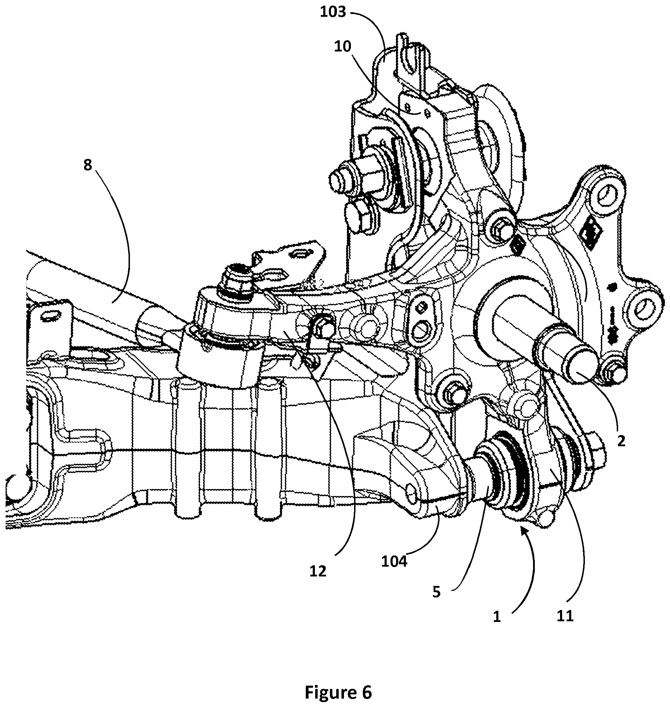

Le porte-fusée 1 arrière gauche est représenté en vue éclatée sur la figure 4 et monté sur le bras 102R sur la figure 6. Le porte-fusée 1 (droit ou gauche) comprend, de façon connue :
- une ouverture centrale 13 de réception de la fusée 2,
- un bras supérieur 10 de réception d'une rotule supérieure 4,
- un bras inférieur 11 de réception d'une rotule inférieure 5, et
- un bras latéral 12 de fixation d'une biellette de direction 8.

La fusée 2 est emmanchée en force dans l'ouverture centrale 13, le porte-fusée 1 et la fusée 2 étant solidaires et formant un ensemble indémontable. Le porte-fusée 1 et la fusée 2 sont ici deux pièces mécaniques distinctes, réalisées respectivement en fonte et en acier par exemple. En variante, le porte-fusée et la fusée pourraient être forgés en une seule pièce. La fusée 2 est destinée à porter le roulement mécanique 6 et la partie centrale 7 de la roue 3.

Le bras supérieur 10 du porte-fusée 1 ménage une ouverture cylindrique traversante 14, formant logement de réception de la rotule supérieure 4. De façon analogue, le bras inférieur 11 ménage une ouverture cylindrique traversante 15 formant logement de réception de la rotule inférieure 5. Les axes de symétrie des ouvertures cylindriques 14 et 15 sont parallèles entre eux et au plan de roue 3 et s'étendent globalement selon la direction longitudinale du véhicule sur la figure 6. Dans l'exemple particulier de réalisation décrit ici, chacune des deux rotules, inférieure 5 et supérieure 4, est emmanchée en force dans le logement de réception correspondant 15, 14 du porte-fusée 1.

Chaque rotule 4 (5) comporte, de façon connue, une partie intérieure et une partie extérieure mobiles en rotation l'une par rapport à l'autre. Plus précisément, chaque rotule 4 (5) comprend une douille intérieure 40 (50) entourée d'une douille 41 (51), ou bague, extérieure. La douille intérieure 40 (50) est un tube cylindrique présentant un renflement de forme sphérique (non représenté). Les deux portions de tube 42, 43 (52, 53), situés de part et d'autre de la portion en renflement sphérique, font saillie à leurs extrémités libres de la bague extérieure 41 (51). Le renflement sphérique est placé dans une cage sphérique interne, par exemple en métal ou en plastique, portée par la bague extérieure 41 (51), et mobile en rotation dans cette cage. La douille intérieure 40 (50) est mobile en rotation par rapport à la bague extérieure 41 (51), autour d'un centre de rotation O (O') correspondant au centre du renflement sphérique, selon les trois axes x, y, z représentés sur les figures 4 et 5. Chaque rotule 4 (5) est montée dans une chape en U 103 (104) solidaire du bras d'essieu 102R, par l'intermédiaire d'un axe support. La bague extérieure de la rotule 4 (5), ici emmanchée en force dans le porte-fusée 2, est solidaire en déplacement du porte-fusée 2. La douille intérieure de la rotule 4 (5) est solidaire en déplacement du bras d'essieu 102R.

La rotule supérieure 4 est symétrique, les deux portions tubulaires 42, 43 de douille intérieure étant de même longueur et équidistantes du centre de rotation de la rotule. En revanche, la rotule inférieure 5 est asymétrique : les deux portions de douille 52, 53 sont de longueurs respectives différentes. Ainsi le centre de rotation, noté O', de la rotule inférieure 5 est décalé par rapport au milieu du segment axial reliant les deux extrémités libres de la douille intérieure 50.

Les deux rotules, supérieure 4 et inférieure 5, définissent un axe de pivot du porte-fusée 1 et de la roue 3 portée par celui-ci, couramment appelé « axe de pivot de direction », contenant les centres de rotation 0 et 0'. L'axe de pivot de direction fait un angle non nul avec la perpendiculaire au sol sur lequel le véhicule est placé. Cet angle, appelé « angle de chasse », joue un rôle important dans la direction du véhicule.

Les rotules 4 et 5 peuvent être montées dans deux sens inverses, par retournement à 180° le long de leur axe longitudinal.

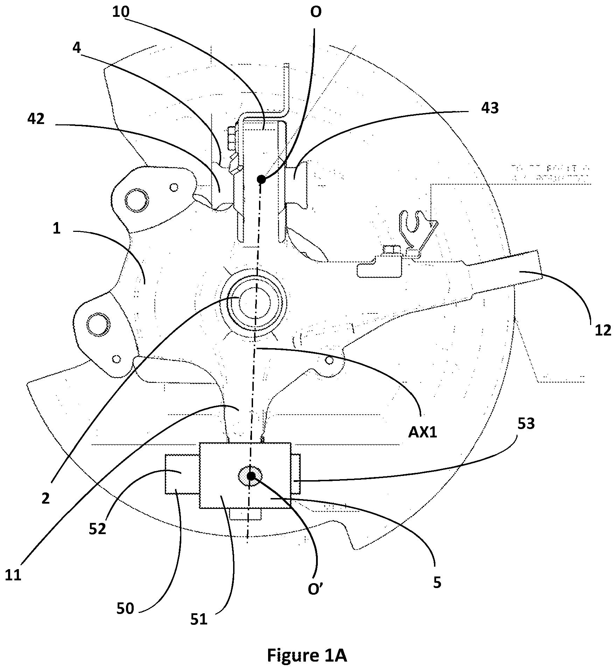

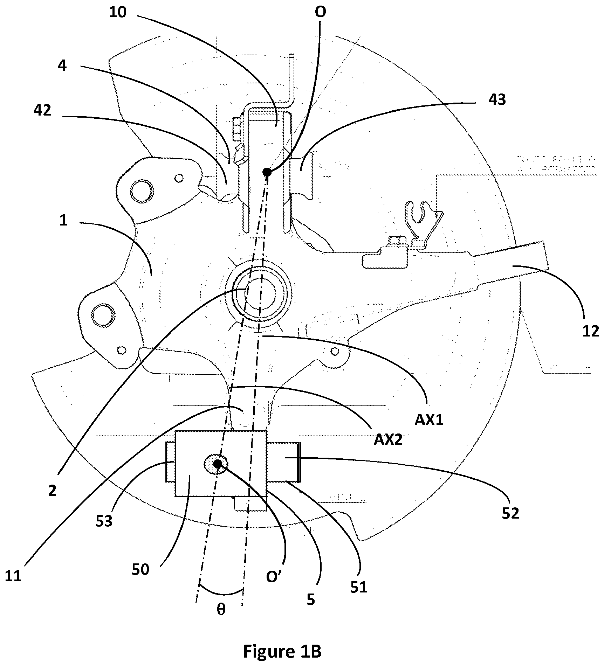

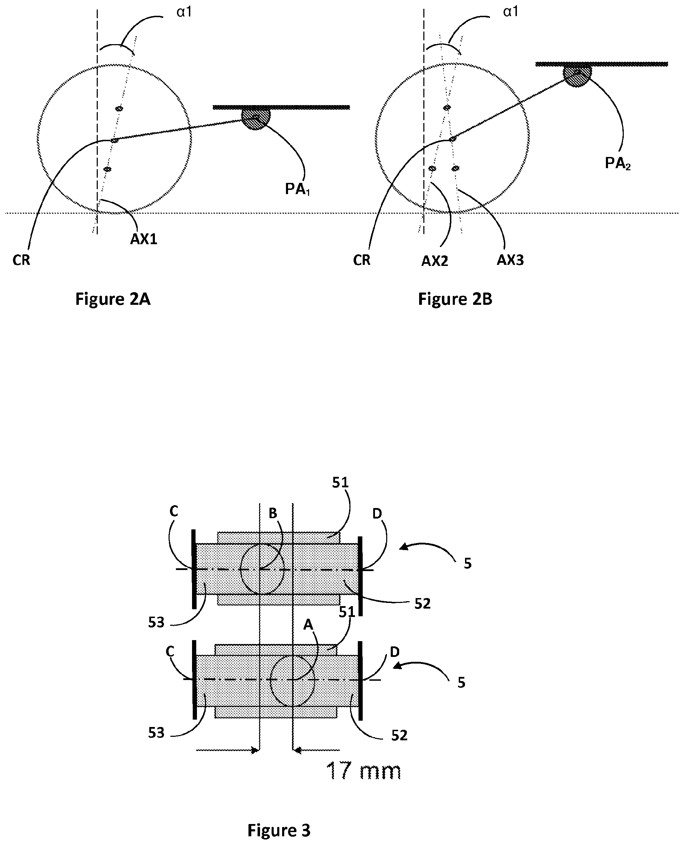

La rotule inférieure 5 étant asymétrique, son retournement permet de définir deux axes de pivot de direction distincts, notés AX1 et AX2, décalés angulairement d'un angle θ. Sur la figure 1A, la rotule inférieure 5 est montée dans un premier sens et définit avec la rotule supérieure 4 l'axe pivot AX1. Sur la figure 1B, la rotule inférieure 5 est montée dans un deuxième sens et définit avec la rotule supérieure 4 l'axe pivot AX2. En outre, sur la figure 1B, on a représenté la position de l'axe pivot AX1 afin de montrer l'angle de décalage θ entre les deux axes AX1 et AX2. En référence aux figures 1A, 1B et 3, lorsque la rotule inférieure 5 est montée dans un premier sens (tel que représenté sur la figure 1A) dans une chape support en U, son centre de rotation O' est positionné en un point A sur le segment [CD] qui relie les deux branches en U de la chape et est porté par l'axe longitudinal de la rotule 5. Lorsque la rotule 5 est montée dans la même chape support, ou dans une chape support analogue, dans le deuxième sens opposé au premier (comme représenté sur la figure 1B), son centre de rotation O' est positionné en un point B, distinct du point A, sur le segment [CD]. Le décalage longitudinal entre les deux points A et B le long du segment [CD], c'est-à-dire entre les deux positions possibles du centre O' selon le sens de montage de la rotule 5, est dans l'exemple de réalisation particulier représenté sur la figure 3 égal à 17mm. Bien entendu, ce décalage pourrait avoir une valeur différente, par exemple comprise entre 1mm et 50mm.

Le train de suspension 100 équipée de la rotule asymétrique 5 peut être monté sur deux types de véhicule, ayant des gardes au sol différentes, l'une dite « haute » et l'autre dite « basse », tout en procurant deux angles de chasse souhaités, notamment deux angles de chasse identiques ou proches.

Prenons l'exemple d'un train de suspension arrière 100 adapté pour être monté sur une berline basse, correspondant à un véhicule V1, et sur un monospace haut, correspondant à un véhicule V2.

Lorsque le train de suspension arrière 100 est monté sur le véhicule V1 (berline basse), les bras d'essieu 102R et 102L sont reliés à l'avant au châssis, ou caisse, du véhicule V1 en deux points respectifs d'articulation essieu sur caisse, notés PA₁, situés à une hauteur H1 par rapport au sol. Sur la figure 2A, on a représenté schématiquement le segment reliant le centre roue CR et le point d'articulation essieu sur caisse PA₁. Dans ce cas, la rotule inférieure 5 est montée dans un premier sens (ici celui représenté sur la figure 1A). Dans cette configuration, les deux rotules de liaison 4 et 5 forme l'axe de pivot de direction AX1 et celui-ci forme un angle de chasse α1 par rapport à la perpendiculaire au sol.

Lorsque le même train de suspension arrière 100 est monté sur le véhicule V2 (monospace haut), les bras d'essieu 102R et 102L sont reliés au châssis, ou caisse, du véhicule V2 en deux points respectifs d'articulation essieu sur caisse, notés PA₂, situés à une hauteur H2 par rapport au sol. La hauteur H2 est strictement supérieure à H1. Il en résulte un « pivotement » de la position du porte-fusée 1 autour de l'axe de roue 3 par rapport à la position correspondante du porte-fusée 1 sur le véhicule V1 (berline basse). Sur la figure 2B, on a représenté schématiquement le segment [CRPA₂] reliant le centre roue CR et le point d'articulation essieu sur caisse PA₂. Dans ce cas, la rotule inférieure 5 est montée dans le deuxième sens (tel que représenté sur la figure 1B), inverse du premier sens. Dans cette configuration, les rotules 4 et 5 forment l'axe de pivot de direction AX₂ qui forme un angle de chasse, ici égal à l'angle α1, par rapport à la perpendiculaire au sol. Le décalage angulaire entre l'axe de pivot AX₂ et l'axe de pivot AX₁ permet en définitive de compenser le pivotement du porte-fusée 2 induit par la différence de hauteur entre les gardes au sol respectives des deux véhicules V1 (berline basse) et V2 (monospace haut).

Sur la figure 2B, on a également représenté un axe AX₃ correspondant à la position du pivot de direction dans l'hypothèse où le train 100 serait monté sur le monospace haut V2, sans modification du sens de montage de la rotule 5 (c'est-à-dire avec la rotule 5 montée dans le premier sens tel que représenté sur la figure 1A). On constate que l'angle de chasse serait dans ce cas modifié, et en l'espèce négatif.

Ainsi, lors du montage du train de suspension 100 sur un véhicule automobile, on sélectionne l'un des deux sens de montage possibles de la rotule asymétrique 5 selon la garde au sol du véhicule. Dans l'exemple de réalisation particulier décrit ici, le premier sens de montage (figure 1A) est choisi pour une berline basse et le deuxième sens de montage (figure 1B) est choisi pour un monospace haut.

Dans l'exemple de réalisation qui vient d'être décrit, l'asymétrie de la rotule inférieure est adaptée pour permettre d'obtenir les mêmes angles de chasse dans le cas où le train arrière est monté sur un véhicule ayant une garde au sol basse et dans le cas où le même train arrière est monté sur un véhicule ayant une garde au sol haute. En variante, l'asymétrie de la rotule inférieure pourrait être adaptée pour obtenir des angles de chasse différents dans les deux sens de montage.

On pourrait envisager une rotule de liaison supérieure asymétrique, à la place d'une rotule inférieure asymétrique.

## Revendications

1. Train de suspension de roues pour véhicule automobile comportant, à chaque extrémité d'une traverse d'essieu (101), un bras longitudinal (102R, 102L) de liaison à un châssis du véhicule, et un porte-fusée (1) monté sur le bras (102R, 102L) par l'intermédiaire de deux rotules de liaison, supérieure (4) et inférieure (5), qui définissent un axe de pivot de direction (AX1), **caractérisé en ce que** l'une des deux rotules, inférieure (5) et supérieure (4), est asymétrique et comprend une douille intérieure (50) comportant deux portions tubulaires coaxiales (52, 53) et de longueurs respectives différentes, situées de part et d'autre d'une portion contenant le centre de rotation (O') de la rotule, ladite rotule asymétrique (5) étant apte à être montée dans deux sens distincts de manière à définir deux axes de pivot de direction distincts (AX1, AX2), décalés angulairement (θ).

2. Train de suspension selon la revendication 1, **caractérisé en ce que** la rotule asymétrique est la rotule inférieure (5).

3. Train de suspension selon l'une des revendications précédentes, **caractérisé en ce que** la rotule asymétrique (5) est montée sur une chape support en U (104) solidaire du bras longitudinal (102L).

4. Train de suspension selon l'une des revendications précédentes, **caractérisé en ce que** le décalage angulaire (θ) entre les deux axes de pivot (AX1, AX2) correspondant aux deux sens de montage de la rotule asymétrique (5) est adapté pour induire deux angles de chasses souhaités, respectivement dans le cas où le train avec la rotule asymétrique montée dans l'un des deux sens est monté sur un véhicule ayant une première garde au sol et dans le cas où le train avec la rotule asymétrique montée dans l'autre sens est monté sur un autre véhicule ayant une deuxième garde au sol, différente de la première.

5. Train selon la revendication précédente, **caractérisé en ce que** les deux angles de chasse souhaités sont identiques (α1).

6. Train de suspension selon l'une des revendications 1 à 6, **caractérisé en ce qu'**il est adapté pour être monté à l'arrière d'un véhicule automobile.

7. Procédé de montage d'un train de suspension selon l'une des revendications 1 à 6 sur un véhicule automobile ayant une garde de sol donnée, **caractérisé en ce qu'**on sélectionne l'un des deux sens de montage possibles de la rotule asymétrique (5) selon la garde au sol du véhicule.

## Patentansprüche

1. Radaufhängungsanordnung für ein Kraftfahrzeug, umfassend an jedem Ende einer Achstraverse (101) einen Längslenker (102R, 102L) zur Verbindung mit einem Untergestell des Fahrzeugs und einen Achsschenkel (1), der an dem Lenker (102R, 102L) über zwei Verbindungskugelgelenke, ein oberes (4) und ein unteres (5), montiert ist, die eine Lenkdrehachse (AX1) definieren, **dadurch gekennzeichnet, dass** eines der beiden unteren (5) und oberen (4) Kugelgelenke asymmetrisch ist und eine Innenhülse (50) umfasst, die zwei koaxiale rohrförmige Abschnitte (52, 53) mit jeweils unterschiedlichen Längen aufweist, die beidseits eines Abschnitts angeordnet sind, der den Drehmittelpunkt (O') des Kugelgelenks enthält, wobei das asymmetrische Kugelgelenk (5) geeignet ist, in zwei unterschiedlichen Richtungen montiert zu werden, so dass es zwei unterschiedliche Lenkdrehachsen (AX1, AX2) definiert, die um einen Winkel (θ) versetzt sind.

2. Aufhängungsanordnung nach Anspruch 1, **dadurch gekennzeichnet, dass** das asymmetrische Kugelgelenk das untere Kugelgelenk (5) ist.

3. Aufhängungsanordnung nach einem der vorhergehenden Ansprüche, **dadurch gekennzeichnet, dass** das asymmetrische Kugelgelenk (5) auf einer mit dem Längslenker (102L) fest verbundenen U-förmigen Tragkappe (104) montiert ist.

4. Aufhängungsanordnung nach einem der vorhergehenden Ansprüche, **dadurch gekennzeichnet, dass** der Winkelversatz (θ) zwischen den beiden Drehachsen (AX1, AX2), der den beiden Montagerichtungen des asymmetrischen Kugelgelenks (5) entspricht, geeignet ist, um, wenn die Anordnung mit dem in eine der beiden Richtungen montierten Kugelgelenk an einem Fahrzeug montiert ist, das eine erste Bodenfreiheit hat, bzw. wenn die Anordnung mit dem in die andere Richtung montierten asymmetrischen Kugelgelenk an einem anderen Fahrzeug montiert ist, das eine zweite Bodenfreiheit hat, die von der ersten verschieden ist, zwei gewünschte Nachlaufwinkel zu induzieren.

5. Anordnung nach dem vorhergehenden Anspruch, **dadurch gekennzeichnet, dass** die beiden gewünschten Nachlaufwinkel identisch sind (αl).

6. Aufhängungsanordnung nach einem der Ansprüche 1 bis 6, **dadurch gekennzeichnet, dass** sie dazu geeignet ist, am Heck eines Kraftfahrzeugs montiert zu werden.

7. Verfahren zur Montage einer Aufhängungsanordnung nach einem der Ansprüche 1 bis 6 an einem Kraftfahrzeug mit einer gegebenen Bodenfreiheit, **dadurch gekennzeichnet, dass** man je nach Bodenfreiheit des Fahrzeugs eine der beiden möglichen Montagerichtungen des asymmetrischen Kugelgelenks (5) wählt.

## Claims

1. Suspension assembly for motor vehicle wheels comprising, at each end of an axle crossbeam (101), a longitudinal arm (102R, 102L) for connection to a chassis of the vehicle, and a steering knuckle (1) mounted on the arm (102R, 102L) via two, an upper (4) and a lower (5), connecting ball joints which define a steering pivot axis (AX1), **characterized in that** one of the two, lower (5) and upper (4), ball joints is asymmetric and comprises an inner bushing (50) comprising two coaxial tubular portions (52, 53) of different respective lengths, situated one on each side of a portion containing the centre of rotation (O') of the ball joint, the said asymmetric ball joint (5) being able to be mounted in two distinct directions so as to define two distinct steering pivot axes (AX1, AX2) with angular offset (θ).

2. Suspension assembly according to Claim 1, **characterized in that** the asymmetric ball joint is the lower ball joint (5).

3. Suspension assembly according to one of the preceding claims, **characterized in that** the asymmetric ball joint (5) is mounted on a U-shaped support bracket (104) secured to the longitudinal arm (102L).

4. Suspension assembly according to one of the preceding claims, **characterized in that** the angular offset (θ) between the two pivot axes (AX1, AX2) corresponding to the two directions in which the asymmetric ball joint (5) can be mounted is designed to induce two desired caster angles, respectively in instances in which the assembly with the asymmetric ball joint mounted in one of the two directions is mounted on a vehicle having a first ground clearance and in instances in which the assembly with the asymmetric ball joint mounted in the other direction is mounted on another vehicle having a second ground clearance different from the first.

5. Assembly according to the preceding claim, **characterized in that** the two desired caster angles are identical (α1).

6. Suspension assembly according to one of Claims 1 to 6, **characterized in that** it is designed to be mounted at the rear of a motor vehicle.

7. Method for mounting a suspension assembly according to one of Claims 1 to 6 on a motor vehicle having a given ground clearance, **characterized in that** one of the two possible directions of mounting of the asymmetric ball joint (5) is selected according to the ground clearance of the vehicle.
